# EUROPEAN PATENT SPECIFICATION

(11) **EP 0 811 968 B1**
(45) Date of publication and mention of the grant of the patent: **02.01.2002**
(21) Application number: 97112534.9
(22) Date of filing: 01.10.1985
(51) Int. Cl.: G11B 7/013, G11B 11/10

(54) **Magneto optical memory element**
Magnetooptisches Speicherelement
Elément de mémoire magnéto-optique

(30) Priority: 02.10.1984 JP 20783884
(43) Date of publication of application: 10.12.1997
(62) Divisional of application: 93102191.9
(73) Proprietor: SHARP KABUSHIKI KAISHA, Osaka-shi, Osaka-fu 545-0013 (JP)
(72) Inventor: Ohta, Kenji, Kitakatsuragi-gun, Nara 636 (JP); Inui, Tetuya, Nara-Shi, Nara-Ken (JP); Fujii, Yoshikazu, Nishi-ku,Kobe-shi, Hyogo 651-21 (JP); Deguchi, Toshihisa, Nara-Shi, Nara-Ken 631-0044 (JP); Maeda, Shigemi, Yamatokoriyama-Shi, Nara-Ken (JP)
(74) Representative: Brown, Kenneth Richard

(56) References cited:
- EP-A- 0 099 085
- EP-A- 0 100 995
- EP-A- 0 126 594
- EP-A- 0 155 000
- WO-A-84/03988
- FR-A- 2 497 994

## Description

The present invention relates to a magneto-optical memory element on which at least one of information recording, reading and erasing operations can be magneto-optically performed. The invention also relates to a method of manufacture thereof.

Recently, an optical memory element, which optically records, reads and erases information, has been gaining attention in various applications as a high density, large capacity memory. Many studies have been made, particularly in relation to an optical disc memory with disc shaped recording element which permits faster access than a tape element.

Since the information recording unit of the optical memory element is about 1µmϕ, it is essential to place a light beam at a predetermined position for the information reading or erasing operation; various servo technologies have been employed for this purpose, because it is difficult to control the beam position with dependence on mechanical accuracy alone.

For example, in the optical disc memory, a focus servo is used to compensate for facial movement of the disc (that is, movement substantially perpendicular to the surface of the disc) and a tracking servo to compensate for core movement (that is, movement substantially parallel to the plane of the disc). When the latter servo is used in a read-only type optical memory, beam position is controlled with reference to previously recorded pits (normally, recesses formed in the PMMA or polycarbonate substrate). In the optical memory of the additive recording type (so called add-on memory) or of the erasable memory type, however, guide track grooves and address signal pits indicating the positions of the grooves are normally formed in the substrate.

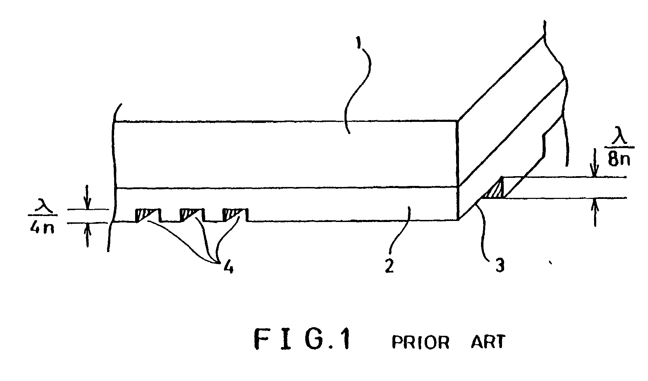

The construction of conventional guide track grooves used in the optical memory of the add-on-memory type is described now with reference to Fig. 1.

Fig. 1 is a partially enlarged view of a conventional optical memory disc in section along the concentric or spiral guide track grooves formed in the disc.

In Fig. 1, 1 denotes a PMMA or glass substrate 1 ₋ 1.5mm thick, and 2 is a photosensitive resin layer (10µm _{~} 100µm thick 2P layer) with guide grooves 3 formed therein for storing information. 4 denotes address signal pits representing the positions of the guide track grooves 3. The depth of the pits 4 is normally λ/4n (λ is the wave length of the reproducing laser beam, and n is the refractive index of the 2P layer), so that address signals are optimally reproduced. The depth of the guide grooves 3 is λ/8n to permit storage of as many as possible tracking signals.

In addition to the above 2P method, it is also common to form the guide grooves 3 and the pits 4 integrally with the PMMA or polycarbonate resin recording disc. In either method, however, moisture in the resin layer, on which the recording medium is disposed, can reach and deteriorate the recording medium.

To overcome the above problem, the inventor has presented a method for forming grooves directly in a glass substrate.

An example of such a method is described in copending U.S. Patent Application Serial No. 606,534, "METHOD FOR MANUFACTURING AN OPTICAL MEMORY ELEMENT", filed on May 3, 1984 by Kenji OHTA, Junji HIROKANE, Hiroyuki KATAYAMA, Akira TAKAHASHI and Hideyoshi YAMAOKA, and assigned to the same assignee as the present application. The corresponding European Patent Application was filed on May 10, 1984 and assigned the Application No. 84303176.6/Publication No. 0,126,594. This copending European Patent Application was published on 28th November 1984 and comprises prior art in accordance with Article 54(3) EPC. The corresponding Canadian Patent Application was filed on May 8, 1984 and assigned the Application No. 453,843.

According to the disclosure of the copending application, a resist film is disposed on a glass substrate, and a laser beam is applied onto the resist film to form a guide groove and address signal pit pattern in the resist film. The thus formed pattern is developed and, then, the guide groove pattern of the developed resist film is directly formed on the glass substrate by the reactive ion etching operation. With this method, however, it is difficult to form the guide grooves 3 and the address signal pits 4 with different depths, because their depth is determined by the time for which the glass substrate is exposed to plasma in the reactive ion etching operation. Accordingly, the configurations of the guide grooves and the address signal pits must be determined, taking into consideration of the address signal output, tracking output or signal output for reading these outputs.

EP-A3-0 100 995 describes an optical disc with a particular arrangement of address pits and tracking grooves formed in its surface. Data is recorded by melting information pits into the reflective metal recording layer using a laser beam. This data is read out by detecting light intensity variations in light reflected from the disc which are caused by the information pits.

EP-A1-0 099 085 discloses an optical disc in which, again, information is recorded by forming pits, using a laser beam, in a light reflective layer disposed on a transparent substrate. Address signal pits are formed on the bottom surface of a tracking guide. A replication method is disclosed for producing the substrate from a transparent synthetic resin using a master disc formed with recesses defining the tracking guide and address signal pits.

According to a first aspect of the invention, there is provided a magneto-optical memory element as defined in appended claim 1. A disclosed magneto-optical reproducing apparatus for use with such a magneto-optical memory element comprises:
an address information read-out means for detecting the variation of light beam intensity reflected from said address signal pits; and data information read-out means for detecting the variation of magnetic polarization angle properties in said magneto-optical recording layer disposed on said guide track grooves wider than said address signal pits so as to obtain information signal of improved C/N thereby optimizing the quality of read-out of both the data information and the address information.

According to a second aspect of the invention there is provided a method of manufacture of a magneto-optical memory element as defined in appended claim 18.

In order that the present invention may be better understood a detailed description will be given of an embodiment thereof, by way of example, with reference to the accompanying drawings, wherein:
Figure 1 is a perspective view which schematically shows a sectional structure of an optical memory disc of the prior art;
Figure 2 is an enlarged view showing guide grooves and address signal pits representing the addresses of the guide grooves in an optical memory element according to the present invention;
Figure 3 is a partially enlarged view of the optical memory element disc of Figure 2 in section along the guide grooves;
Figure 4 is a conceptual drawing showing the construction of the pick-up for an optical magnetic disc;
Figure 5 is a partially enlarged section view of an optical magnetic disc according to the invention;
Figure 6 shows the relationship between C/N and the track width;
Figures 7(A) and 7(B) show the variation of the address signal according to the track width;
Figures 8(A) and 8(B) show the relationship between the recording signal or address signal pits and the beam diameter;
Figure 9 shows an example method for manufacturing the optical memory element of the present invention; and
Figure 10 shows an example of the electrical input signals for manufacturing the optical memory element of the present invention.

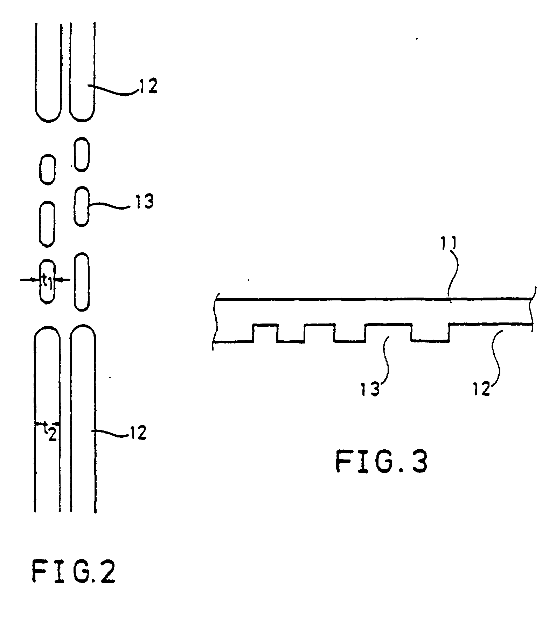

In the figures, 11 is a substrate made of, for example, glass. 12 is guide grooves formed in the substrate 11, and 13 is address signal pits representing the numbers of the guide grooves 12. As shown in Fig. 2, the pit width t₁ of the pits 13 is formed narrower than the groove width t₂ of the guide grooves 12.

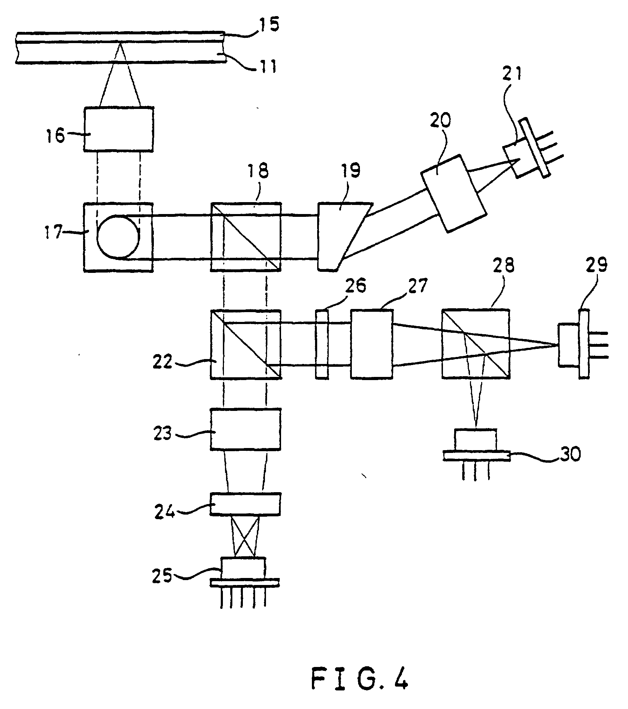

Figure 4 is a conceptual drawing of the construction of the optical system for an optical magnetic disc capable of rewriting the stored information. 11 is a glass substrate, 15 is an optical magnetic recording medium, 16 is an objective lens, 17 is a reflection lens, 18 is a beam splitter, 19 is a beam shape controlling prism, 20 is a collimator lens, 21 is a semiconductor laser, 22 is a beam splitter, 23 is a lens, 24 is a cylindrical lens, 25 is a quarterly PIN photo diode, 26 is a λ/2 filter plate, 27 is a lens, 28 is a deflecting beam splitter, and 29 and 30 are avalanche photo diodes.

In Fig. 4, a tracking signal is obtained from the quarterly PIN photo diode 25 by the push-pull method, and an address signal is obtained by summing the outputs from the two avalanche photo diodes 29 and 30. Information signal is obtained by the differential detection method, that is, by subtraction between the outputs from the avalanche photo diodes 29 and 30. N.A. of the objective lens 16 is 0.6, and the beam is stopped down to about 1.1µm at the position of 1/ₑ2.

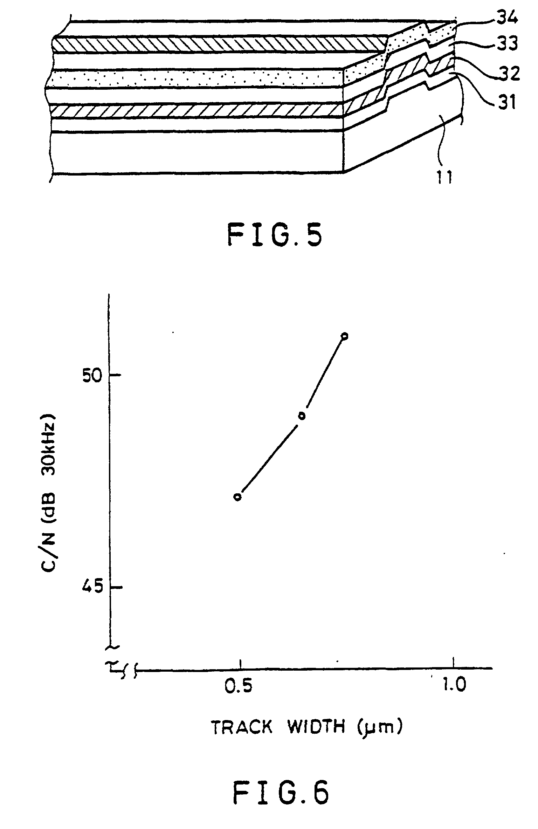

Figure 5 is a partially enlarged view of the optical magnetic disc, in section across the guide track grooves 12, from which disc information is reproduced by the optical system shown in Fig. 4. An AℓN layer 31, GbTbFe 32, AℓN layer 33 and AℓNi layer 34 are formed in lamination on the glass substrate 11 with guide grooves formed therein.

Figure 6 shows C/N plotted as a function of the track width t₂, with 1MHz signal being recorded on or reproduced from the optical magnetic disc (shown in Fig. 5) whose guide groove (track) depth is 70nm.

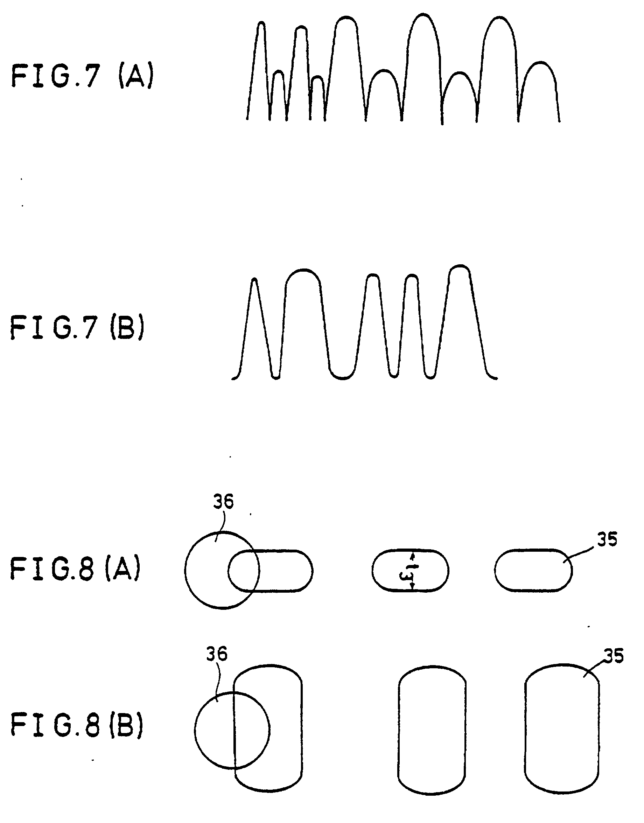

Figure 7 (A) shows the waveform of reproducing address signal of the optical magnetic disc used for the measurement in Fig. 6, for the track width of 0.75µm, and Fig. 7 (B) shows the corresponding waveform for the track width of 0.48 µm.

As obvious from Fig. 6, wider track width results in information signal of hetter C/N. This is easily understood from the following two facts: First, C/N quality depends upon the relationship between the beam diameter 36 and the width t₃ of the signal pits 35 as shown in Fig. 8 (A); ideally, the signal pits 35 should be wider than the beam diameter 36 as shown in Fig. 8 (3). Second, the pit width in the optical magnetic disc having the guide grooves therein is limited by the width t₂ of the guide grooves 12.

Further, it is also appreciated from Figs. 7 (A) and 7 (B) that narrower address signal pit width t₁ effects better result. When a wider pit width t₁ is selected, namely, when the signal pits 35 in Fig. 8 (B) are considered as address signal pits, for instance, the beam 36, which comes in the center of a pit 35, completely enter the pit 35, resulting in the condition as if there was no pit. As a result, amount of light returning to the detector will increase. This is why the signal is high at the center, as shown in Fig. 7(A).

It will be well understood from the above description that, in the optical magnetic recording disc having about λ/8n (65₋70nm) deep guide track grooves 12 and address signal pits L3, the larger width t₂ of the guide track grooves 12 and the narrower width t₁ of the address signal pits 13, as shown in Fig. 2, yield the better result.

For the optical memory element with the above mentioned construction in which an optical head shown in Fig. 4 is used with a disc shown in Figs. 2, 3 and 5, sufficient tracking signal is obtained with 1µm or narrower track width t₂.

As described above, one of the features of the optical memory element of the present invention is that, where address signal pits are as deep as a guide track groove as shown in Fig. 2, the width of the address signal pits is made narrower and that of the guide track groove made wider.

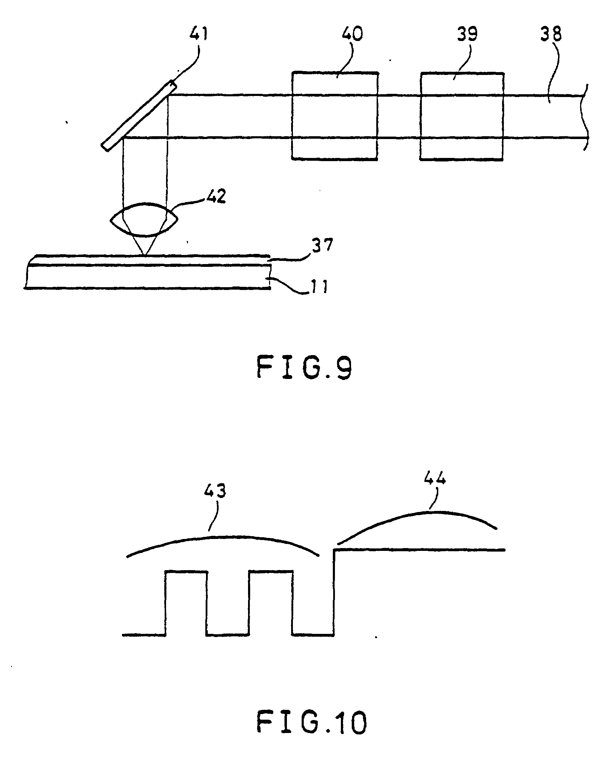

Now, the manufacturing steps for a glass disc used in the present invention will be described in the following with reference to Figure 9.

### Step (i)

A resist film 37 is applied on a glass substrate 11 which does not pass oxygen and moisture therethrough.

### Step (ii)

An argon (Ar) laser beam 38 is applied to the resist film 37 disposed on the glass substrate 11, via a light modulators 39 and 40, a mirror 41 and a condenser 42, so as to describe lines of the width t₂ for the guide track grooves 12 (shown in Fig. 2) of the optical memory element as well as intermittent lines of the width t₁ (See Fig. 9) for the address signal pits 13. The required widths for the guide track grooves 12 and the address signal pits 13 are obtained by making the laser power larger in describing the lines for the guide track grooves 12 than in describing the intermittent lines for the address signal pits 13.

Specifically, the light modulators 39 and 40 are placed in the light path of the laser (for example, Ar) beam 38, as shown in Fig. 9. One of the light modulators is used for modulating address signals, the other being used for reducing the laser power a little when describing the lines for the address signal pits. Instead of using the above two modulators, a modulator with which modulation changes linearly according to the input may be used. In this case, the input power height 43 (Fig. 10) for recording the address signal pits is made lower than the input power height 44 for recording the guide track grooves.

### Step (iii)

The resist film 37 with the lines and the intermittent lines thereon is developed to form grooves and pits in the resist film 37.

### Step (iv)

Sputtering operation (reactive ion etching) is conducted to the glass substrate 11 coated with the resist film 37 having the grooves formed therein, in the etching gas atmosphere such as CF₄ or CHF₃, so as to form the grooves 12 and the pits 13 in the glass substrate 11.

### Step (v)

The developed resist film 37 is removed from the glass substrate 11 through the use of solvent such as acetone, or by sputtering operation in the O₂ atmosphere. As a result, the guide track grooves 12 of the width t₂ and the address signal pits L3 of the width t₁ are formed in the glass substrate 11.

In this way, the guide track grooves 12 and the address signal pits 13 of the configurations as shown in Fig. 2 are formed in the glass substrate 11.

## Claims

1. A magneto-optical memory element, comprising:
a substrate (11) including a plurality of guide track grooves (12) and address signal pits (13) provided between two successive said guide track grooves (12); and
a multilayered structure formed on the substrate (11) including the guide track grooves and the address signal pits and configured for recording data information, the multilayered structure having substantially a uniform thickness within each of the guide track grooves (12),
wherein a width of the address signal pit (13) is narrower than a width of each of the guide track grooves (12).

2. A magneto-optical memory element according to claim 1, wherein the substrate (11) is a glass substrate.

3. A magneto-optical memory element according to claim 1, wherein the substrate (11) is a resin substrate.

4. A magneto-optical memory element according to any one of claims 1 to 3, wherein the address signal pits (13) are configured for providing address signal information through a detection of a variation of a light beam intensity reflected from the address signal pits (13).

5. A magneto-optical memory element according to any one of claims 1 to 3, wherein the address signal pits (13) are configured for providing address signal information through a detection of a diffraction of a light beam intensity reflected from the address signal pits (13).

6. A magneto-optical memory element according to any one of claims 1 to 5, wherein the multilayered structure is configured for providing the data information through a detection of a variation of a magnetic polarization angle property.

7. A magneto-optical memory element according to any one of claims 1 to 5, wherein the multilayered structure includes a perpendicular magnetization layer, and is configured for providing the data information through a detection of a difference in a magneto-optical rotation angle corresponding to a direction of magnetization of the perpendicular magnetization layer.

8. A magneto-optical memory element according to any one of claims 1 to 7, wherein the width of each of the guide track grooves (12) is about 1.0 µm or less.

9. A magneto-optical memory element according to claim 8, wherein the width of each of the guide track grooves (12) is in a range of about 0.75 µm to about 1.0 µm.

10. A magneto-optical memory element according to any one of claims 1 to 9, wherein a depth of the address signal pits (13) is substantially equal to a depth of each of the guide track grooves (12).

11. A magneto-optical memory element according to any one of claims 1 to 10, wherein a depth of the address signal pits (13) is equal to approximately 70 nm.

12. A magneto-optical memory element according to any one of claims 1 to 11, wherein the multilayered structure includes a magneto-optical recording layer (15).

13. A magneto-optical memory element according to claim 12, wherein the magneto-optical recording layer (15) is an alloy layer (32) of a rare earth element and a transition element.

14. A magneto-optical memory element according to claim 13, wherein the magneto-optical recording layer (15) is a GdTbFe alloy layer (32).

15. A magneto-optical memory element according to claim 14, wherein the multilayered structure includes a first AlN layer (31), a GdTbFe layer (32), a second AlN layer (33), and an AlNi layer (34).

16. A magneto-optical memory element according to any one of claims 1 to 15, wherein the address signal pits (13) are provided between the two successive guide track grooves (12) in a circumferential direction.

17. A magneto-optical memory element according to any one of claims 1 to 16, wherein the address signal pits (13) are aligned with the guide track grooves in a longitudinal direction of the guide track grooves (12).

18. A method for forming a magneto-optical memory element as recited in any preceding claims, comprising the steps of:
providing the substrate (11) including a plurality of the guide track grooves (12) and the address signal pits (13) provided between the two successive guide track grooves; and
forming the multilayered structure of substantially uniform thickness on the substrate (11) including the guide grooves and the address signal pits and configured for recording data information,
wherein the address signal pits (13) are provided so as to have a narrower width than each of the guide track grooves (12).

19. A method according to claim 18, further comprising the steps of:
depositing a resist film (37) on the substrate (11);
applying a laser beam to the resist film (37) to describe a pattern of the guide track grooves (12) and the address signal pits (13) in the resist film (37);
developing the resist film (37) and etching the substrate (11) so as to simultaneously form the guide track grooves (12) and the address signal pits (13) therein, in accordance with the pattern described in the resist film (37); and
removing the remaining resist film (37).

20. A method according to claim 18 or claim 19, wherein the laser beam is applied at different power intensities for forming the guide track grooves (12) and the address signal pits (13), respectively.

21. A method according to claim 20, wherein the power intensity of the laser beam to be applied for forming the address signal pits (13) is lower than that to be applied for forming the guide track grooves (12).

22. A method according to any one of claims 18 to 21, wherein each of the guide track grooves (12) and its respective adjacent address signal pits (13) are formed at spaced apart locations on the substrate (11).

23. A magneto-optical memory element comprising a substrate (11) and a perpendicularly magnetized magneto-optical recording layer (15), said substrate having guide track grooves (12) and address signal pits (13), a width of said guide track grooves being larger than that of said address signal pits, said magneto-optical recording layer (15) having a thickness which remains unchanged during recording or reproducing.

## Patentansprüche

1. Magnetooptisches Speicherelement mit:
- einem Substrat (11) mit einer Anzahl von Führungsspurgräben (12) und Adressensignalvertiefungen (13) zwischen zwei aufeinanderfolgenden der Führungsspurgräben (12); und
- einer mehrschichtigen Struktur, die auf dem Substrat (11) ausgebildet ist und die die Führungsspurgräben und die Adressensignalvertiefungen enthält und zum Aufzeichnen von Dateninformation konfiguriert ist, wobei sie innerhalb jedem der Führungsspurgräben (12) eine im Wesentlichen gleichmäßige Dicke aufweist;
- wobei die Breite einer Adressensignalvertiefung (13) kleiner als die Breite jedes der Führungsspurgräben (12) ist.

2. Magnetooptisches Speicherelement nach Anspruch 1, bei dem das Substrat (11) ein Glassubstrat ist.

3. Magnetooptisches Speicherelement nach Anspruch 1, bei dem das Substrat (11) ein Harzsubstrat ist.

4. Magnetooptisches Speicherelement nach einem der Ansprüche 1 bis 3, bei dem die Adressensignalvertiefungen (13) so konfiguriert sind, dass sie Adressensignalinformation mittels Erfassung einer Variation der Intensität eines an den Adressensignalvertiefungen (13) reflektierten Lichtstrahls liefern.

5. Magnetooptisches Speicherelement nach einem der Ansprüche 1 bis 3, bei dem die Adressensignalvertiefungen (13) so konfiguriert sind, dass sie Adressensignalinformation mittels Erfassung eines Beugungseffekts der an den Adressensignalvertiefungen (13) reflektierten Lichtstrahlintensität liefern.

6. Magnetooptisches Speicherelement nach einem der Ansprüche 1 bis 5, bei dem die mehrschichtige Struktur so konfiguriert ist, dass sie die Dateninformation mittels Erfassung einer Variation der Eigenschaft des magnetischen Polarisationswinkels liefert.

7. Magnetooptisches Speicherelement nach einem der Ansprüche 1 bis 5, bei dem die mehrschichtige Struktur eine Schicht mit rechtwinkliger Magnetisierung aufweist und sie so konfiguriert ist, dass sie die Dateninformation mittels Erfassung einer Differenz betreffend einen Winkel magnetooptischer Rotation, entsprechend der Magnetisierungsrichtung der rechtwinklig magnetisierten Schicht, liefert.

8. Magnetooptisches Speicherelement nach einem der Ansprüche 1 bis 7, bei dem die Breite jedes der Führungsspurgräben (12) ungefähr 1,0 µm oder weniger beträgt.

9. Magnetooptisches Speicherelement nach Anspruch 8, bei dem die Breite jedes der Führungsspurgräben (12) im Bereich von ungefähr 0,75 µm bis ungefähr 1,0 µm liegt.

10. Magnetooptisches Speicherelement nach einem der Ansprüche 1 bis 9, bei dem die Tiefe der Adressensignalvertiefungen (13) im Wesentlichen der Tiefe jedes der Führungsspurgräben (12) entspricht.

11. Magnetooptisches Speicherelement nach einem der Ansprüche 1 bis 10, bei dem die Tiefe der Adressensignalvertiefungen (13) ungefähr 70 nm entspricht.

12. Magnetooptisches Speicherelement nach einem der Ansprüche 1 bis 11, bei dem die mehrschichtige Struktur eine magnetooptische Aufzeichnungsschicht (15) enthält.

13. Magnetooptisches Speicherelement nach Anspruch 12, bei dem die magnetooptische Aufzeichnungsschicht (15) eine Legierungsschicht (32) aus einem Seltenerdelement und einem Übergangselement ist.

14. Magnetooptisches Speicherelement nach Anspruch 13, bei dem die magnetooptische Aufzeichnungsschicht (15) eine GdTbFe-Legierungsschicht (32) ist.

15. Magnetooptisches Speicherelement nach Anspruch 14, bei dem die mehrschichtige Struktur eine erste AlN-Schicht (31), eine GdTbFe-Schicht (32), eine zweite AlN-Schicht (33) und eine AlNi-Schicht (34) enthält.

16. Magnetooptisches Speicherelement nach einem der Ansprüche 1 bist 15, bei dem die Adressensignalvertiefungen (13) zwischen den zwei aufeinanderfolgenden Führungsspurgräben (12) in der Umfangsrichtung vorhanden sind.

17. Magnetooptisches Speicherelement nach einem der Ansprüche 1 bis 16, bei dem die Adressensignalvertiefungen (13) in der Längsrichtung der Führungsspurgräben (12) mit diesen ausgerichtet sind.

18. Verfahren zum Herstellen eines magnetooptischen Speicherelements nach einem der vorstehenden Ansprüche, mit den folgenden Schritten:
- Bereitstellen des Substrats (11) mit einer Anzahl von Führungsspurgräben (12) und den Adressensignalvertiefungen (13) zwischen zwei aufeinanderfolgenden Führungsspurgräben; und
- Herstellen der mehrschichtigen Struktur mit im Wesentlichen gleichmäßiger Dicke auf dem Substrat (11) einschließlich der Führungsgräben und der Adressensignalvertiefungen, wobei sie zum Aufzeichnen von Dateninformation konfiguriert ist;
- wobei die Adressensignalvertiefungen (13) so vorhanden sind, dass sie eine schmalere Breite als jeder der Führungsspurgräben (12) aufweisen.

19. Verfahren nach Anspruch 18, ferner mit den folgenden Schritten:
- Abscheiden eines Resistfilms (37) auf dem Substrat (11);
- Aufstrahlen eines Laserstrahls auf den Resistfilm (37) zum Schreiben eines Musters der Führungsspurgräben (12) und der Adressensignalvertiefungen (13) im Resistfilm (37);
- Entwickeln des Resistfilms (37) und Ätzen des Substrats (11), um die Führungsspurgräben (12) und die Adressensignalvertiefungen (13) gleichzeitig in ihm entsprechend dem in den Resistfilm (37) eingeschriebenen Muster auszubilden; und
- Entfernen des verbliebenen Resistfilms (37).

20. Verfahren nach Anspruch 18 oder Anspruch 19, bei dem der Laserstrahl mit verschiedenen Leistungsstärken eingestrahlt wird, um die Führungsspurgräben (12) bzw. die Adressensignalvertiefungen (13) auszubilden.

21. Verfahren nach Anspruch 20, bei dem die Leistungsstärke des zum Ausbilden der Adressensignalvertiefungen (13) aufzustrahlenden Laserstrahls niedriger als die ist, die zum Ausbilden der Führungsspurgräben (12) aufgestrahlt wird.

22. Verfahren nach einem der Ansprüche 18 bis 21, bei dem jeder der Führungsspurgräben (12) und die jeweiligen benachbarten Adressensignalvertiefungen (13) an voneinander beabstandeten Orten auf dem Substrat (11) ausgebildet werden.

23. Magnetooptisches Speicherelement mit einem Substrat (11) und einer rechtwinklig magnetisierten magnetooptischen Aufzeichnungsschicht (15), wobei dieses Substrat über Führungsspurgräben (12) und Adressensignalvertiefungen (13) verfügt, wobei die Breite der Führungsspurgräben größer als diejenige der Adressensignalvertiefungen ist und die magnetooptische Aufzeichnungsschicht (15) eine Dicke aufweist, die während des Aufzeichnens oder Abspielens unverändert bleibt.

## Revendications

1. Elément de mémoire magnéto-optique, comportant :
un substrat (11) comprenant une multiplicité de sillons (12) de piste de guidage et de microcuvettes (13) de signal d'adresse prévus entre deux dits sillons (12) de piste de guidage ; et
une structure multicouches formée sur le substrat (11) comprenant les sillons de piste de guidage et les microcuvettes de signal d'adresse et configurée pour l'enregistrement d'informations sous forme de données, la structure multicouches présentant une épaisseur sensiblement uniforme à l'intérieur de chacun des sillons (12) de piste de guidage,
dans lequel la largeur des microcuvettes (13) de signal d'adresse est plus faible que la largeur de chacun des sillons (12) de piste de guidage.

2. Elément de mémoire magnéto-optique selon la revendication 1, dans lequel le substrat (11) est un substrat en verre.

3. Elément de mémoire magnéto-optique selon la revendication 1, dans lequel le substrat (11) est un substrat en résine.

4. Elément de mémoire magnéto-optique selon l'une quelconque des revendications 1 à 3, dans lequel les microcuvettes (13) de signal d'adresse sont configurées pour fournir des informations de signal d'adresse grâce à la détection d'une variation de l'intensité d'un faisceau lumineux réfléchi par les microcuvettes (13) de signal d'adresse.

5. Elément de mémoire magnéto-optique selon l'une quelconque des revendications 1 à 3, dans lequel les microcuvettes (13) de signal d'adresse sont configurées pour fournir des informations de signal d'adresse grâce à la détection d'une diffraction de l'intensité d'un faisceau lumineux réfléchi par les microcuvettes (13) de signal d'adresse.

6. Elément de mémoire magnéto-optique selon l'une quelconque des revendications 1 à 5, dans lequel la structure multicouches est configurée pour fournir les informations sous forme de données grâce à la détection d'une variation d'une propriété de l'angle de polarisation magnétique.

7. Elément de mémoire magnéto-optique selon l'une quelconque des revendications 1 à 5, dans lequel la structure multicouches comprend une couche d'aimantation perpendiculaire et est configurée pour fournir les informations sous forme de données grâce à la détection d'une différence de l'angle de rotation magnéto-optique correspondant au sens d'aimantation de la couche d'aimantation perpendiculaire.

8. Elément de mémoire magnéto-optique selon l'une quelconque des revendications 1 à 7, dans lequel la largeur de chacun des sillons (12) de piste de guidage est égale ou inférieure à environ 1,0 µm.

9. Elément de mémoire magnéto-optique selon la revendication 8, dans lequel la largeur de chacun des sillons (12) de piste de guidage est comprise entre environ 0,75 µm et environ 1,0 µm.

10. Elément de mémoire magnéto-optique selon l'une quelconque des revendications 1 à 9, dans lequel la profondeur des microcuvettes (13) de signal d'adresse est sensiblement égale à la profondeur de chacun des sillons (12) de piste de guidage.

11. Elément de mémoire magnéto-optique selon l'une quelconque des revendications 1 à 10, dans lequel la profondeur des microcuvettes (13) de signal d'adresse est égale à environ 70 nm.

12. Elément de mémoire magnéto-optique selon l'une quelconque des revendications 1 à 11, dans lequel la structure multicouches comprend une couche d'enregistrement magnéto-optique (15).

13. Elément de mémoire magnéto-optique selon la revendication 12, dans lequel la couche d'enregistrement magnéto-optique (15) est une couche (32) constitué d'un alliage d'un élément des terres rares et d'un élément de transition.

14. Elément de mémoire magnéto-optique selon la revendication 13, dans lequel la couche d'enregistrement magnéto-optique (15) est une couche (32) constitué d'un alliage GdTbFe.

15. Elément de mémoire magnéto-optique selon la revendication 14, dans lequel la couche multicouche comprend une première couche de AIN (31), une couche de GdTbFe (32), une seconde couche de AIN (33) et une couche de AINi (34).

16. Elément de mémoire magnéto-optique selon l'une quelconque des revendications 1 à 15, dans lequel les microcuvettes (13) de signal d'adresse sont prévues entre les deux sillons (12) de piste de guidage successifs dans le sens circonférentiel.

17. Elément de mémoire magnéto-optique selon l'une quelconque des revendications 1 à 16, dans lequel les microcuvettes (13) de signal d'adresse sont alignées avec les sillons de piste de guidage dans le sens longitudinal des sillons (12) de piste de guidage.

18. Procédé de formation d'un élément de mémoire magnéto-optique selon l'une quelconque des revendications précédentes, comportant les étapes consistant :
à produire le substrat (11) comprenant la multiplicité de sillons (12) de piste de guidage et les microcuvettes (13) de signal d'adresse prévues entre les deux sillons de piste de guidage successifs ; et
à former la structure multicouches d'épaisseur sensiblement uniforme sur le substrat (11) comprenant les sillons de guidage et les microcuvettes de signal d'adresse et configurée pour l'enregistrement d'informations sous forme de données,
dans lequel les microcuvettes (13) de signal d'adresse sont prévus de façon à présenter une largeur plus faible que celle de chacun des sillons (12) de piste de guidage.

19. Procédé selon la revendication 18, comportant, en outre, les étapes consistant :
à déposer un film de résist (37) sur le substrat (11);
à appliquer un faisceau laser au film de résist (37) pour décrire le motif des sillons (12) de piste de guidage et des microcuvettes (13) de signal d'adresse dans le film de résist (37).
à développer le film de résist (37) et à attaquer le substrat (11) de manière à former dans celui-ci simultanément les sillons (12) de piste de guidage et les microcuvettes (13) de signal d'adresse, selon le motif décrit dans le film de résist (37) ; et
à retirer le reste du film de résist (37).

20. Procédé selon la revendication 18 ou la revendication 19, dans lequel le faisceau laser est appliqué suivant des intensités d'énergie différentes pour former les sillons (12) de piste de guidage et les microcuvettes (13) de signal d'adresse, respectivement.

21. Procédé selon la revendication 20, dans lequel l'intensité d'énergie du faisceau laser à appliquer pour former les microcuvettes (13) de signal d'adresse est inférieure à celle à appliquer pour former les sillons (12) de piste de guidage.

22. Procédé selon l'une quelconque des revendications 18 à 21, dans lequel chacun des sillons (12) de signal d'adresse et ses microcuvettes (13) de signal d'adresse adjacents respectives sont formés en des emplacements mutuellement espacés sur le substrat (11).

23. Elément de mémoire magnéto-optique comportant un substrat (11) et une couche d'enregistrement magnéto-optique (15) aimantée perpendiculairement, ledit substrat ayant des sillons (12) de piste de guidage et des microcuvettes (13) de signal d'adresse, la largeur desdits sillons de piste de guidage étant supérieure à celle desdites microcuvettes de signal d'adresse, ladite couche d'enregistrement magnéto-optique (15) ayant une largeur qui reste inchangée pendant l'enregistrement ou la reproduction.
